# EUROPÄISCHE PATENTSCHRIFT

(11) **EP 4 159 425 B1**
(45) Veröffentlichungstag und Bekanntmachung des Hinweises auf die Patenterteilung: **07.05.2025**
(21) Anmeldenummer: 22195499.3
(22) Anmeldetag: 14.09.2022
(51) Int. Cl.: B29D 30/48, B29B 15/12, D07B 1/16, D07B 1/06, D02G 3/48

(54) **VERFAHREN ZUR MODIFIKATION VON KABELKERNEN FÜR DIE REIFENFERTIGUNG UND KABELKERN**
METHOD FOR MODIFYING THE CABLE CORE FOR THE MANUFACTURE OF TYRES AND CABLE CORE
PROCÉDÉ DE MODIFICATION D'UNE TRINGLE POUR LA FABRICATION DE PNEUS ET TRINGLE

(30) Priorität: 01.10.2021 DE 102021211067
(43) Veröffentlichungstag der Anmeldung: 05.04.2023
(73) Patentinhaber: Continental Reifen Deutschland GmbH, 30175 Hannover (DE)
(72) Erfinder: Justine, Carole, 30165 Hannover (DE); Werner, Lukas, 30165 Hannover (DE); Bendoumou, Abdelkrim, 30165 Hannover (DE); Moura, Tiago, 30165 Hannover (DE)
(74) Vertreter: Continental Corporation

(56) Entgegenhaltungen:
- EP-A1- 2 000 585
- EP-A1- 3 875 678
- WO-A1-2019/015792
- AT-B- 395 732
- DE-A1- 102018 209 522
- DE-A1- 4 125 887
- JP-A- 2002 088 668
- US-A1- 2004 166 299
- US-A1- 2013 220 505

## Beschreibung

Die Erfindung betrifft ein Verfahren zur Modifikation eines Kabelkerns, insbesondere für den Einsatz in der Reifenfertigung, ein darauf aufbauendes Verfahren zur Herstellung eines Fahrzeugreifens, entsprechende modifizierte Kabelkerne, Kautschukprodukte, insbesondere Fahrzeugreife, die diese modifizierten Kabelkerne umfassen und eine Verwendung von nicht-metallischen Verstärkungsstreifen zur Verbesserung der Adhäsion von Gummiwerkstoffen an Kabelkernen.

Der Gegenstand der Erfindung ist in den beigefügten Ansprüchen definiert.

Bei der Fertigung moderner Fahrzeugluftreifen kommen regelmäßig sogenannte Kabelkerne zum Einsatz, welche insbesondere in der Wulst von Fahrzeugluftreifen eingesetzt werden. Kabelkerne sind dem Fachmann bekannt. Dabei handelt es sich um strangförmige Produkte, bei denen ein zentrales Kernfilament von zumeist mehreren Lagen an Filamenten umgeben ist, die jeweils um das Kernfilament bzw. unter die darunter liegende Filamentlage herum angeordnet sind, sodass die Filamente jeder Lage parallel zueinander liegen und um die darunter liegende Lage zumeist spiralförmige verdreht bzw. herumgewunden sind. In Kabelkernen liegen die Filamente einer Lage regelmäßig eng aneinander, sodass von außen zumeist lediglich die äußere Filamentlage sichtbar ist.

Um in der späteren Reifenfertigung Fahrzeugluftreifen erhalten zu können, welche auch bei hohen Belastungen zuverlässig auf der Felge verbleiben, ist es regelmäßig notwendig, dass die eingesetzten Kabelkerne in dem vulkanisierten Fahrzeugreifen einen festen Verbund mit dem sie umgebenden Gummiwerkstoff bilden.

Dem Fachmann ist insoweit bekannt, dass die adhäsive Wechselwirkung zwischen vulkanisierbaren Kautschukmischungen bzw. den daraus herstellbaren Gummiwerkstoffen mit den regelmäßig aus Metall bestehenden Kabelkernen in vielen Fällen unzureichend ist, sodass es ohne weitere Maßnahmen bei starker Belastung zu Materialfehlern kommen kann, wobei teilweise bereits die Fertigung eines festen Verbundes zwischen dem Gummiwerkstoff und dem Kabelkern erschwert sein kann.

Zur Lösung des Problems wurden bislang zumeist Haftvermittler eingesetzt, welche beispielsweise als Zusatz zu der Gummierungsmischung und/oder als Beschichtung der Kabelkerne eingesetzt werden. Der bekannte Einsatz entsprechender Haftvermittler wird jedoch regelmäßig als nachteilig empfunden. Bei einigen aus dem Stand der Technik bekannten Lösungen wird die durch den Haftvermittler erreichte Verbundfestigkeit zwischen dem Kabelkern und dem Gummiwerkstoff nicht als ausreichend empfunden. Weit schwerer wiegt jedoch in den meisten Fällen, insbesondere bei vielen der bekanntermaßen leistungsfähigen Haftvermittler, dass diese häufig gesundheitsschädlich sind und dadurch die bei der Fertigung eingesetzten Arbeitskräfte einem Gesundheitsrisiko aussetzen bzw. die Umwelt belasten können.

Beispiele für die Beschichtung von Kabelkernen, insbesondere für Reifen, sind beispielsweise in der JP 2002088668 A1, der EP 3875678 A1 und der DE 4125887 A1. Weitere Informationen zum technologischen Hintergrund sind in der AT 395732 B, der US 2004/166299 A1, der EP2000585 A1, der US 2013/220505 A1 und der WO 2019/015792 A1 offenbart.

Vor dem Hintergrund eines zunehmenden Bewusstseins für nachhaltiges Wirtschaften geht in vielen Ländern zudem die Tendenz dahin, den Einsatz entsprechender gesundheits- und/oder umweltschädlicher Haftvermittler zu verbieten oder zumindest zu limitieren, wobei nicht auszuschließen ist, dass langfristig sämtliche der aus dem Stand der Technik als leistungsfähig bekannten Haftvermittler in wesentlichen Teilen der Welt nicht mehr eingesetzt werden können.

Um eine Alternative zu den bekannten Haftvermittlern zu schaffen, wurden beispielsweise Versuche unternommen, Kabelkerne mit Geweben zu umwickeln, mit denen die Verbundfestigkeit erhöht werden sollte, wobei diese Lösungsansätze in vielen Fällen hinsichtlich der zu erreichenden Verbundfestigkeit und des Fertigungsaufwandes bei der Umhüllung des Kabelkerns mit dem Gewebe als unzureichend empfunden wurden.

Die Aufgabe der vorliegenden Erfindung war es, die vorstehend beschriebenen Nachteile des Standes der Technik zu beheben oder zumindest zu verringern.

Insbesondere war es eine Aufgabe der vorliegenden Erfindung, ein Verfahren zur Modifikation eines Kabelkerns anzugeben, mit welchem modifizierte Kabelkerne erhalten werden können, welche beim Einsatz in Kautschukprodukten über eine ausgezeichnete Verbundfestigkeit mit dem umgebenden Gummiwerkstoff verfügen.

Insoweit war es eine Aufgabe, dass das anzugebende Verfahren ohne den Einsatz von gesundheitsschädlichen Substanzen auskommen sollte und insbesondere keine herkömmlichen Beschichtungen als Haftvermittler benötigt werden sollten.

Vor diesem Hintergrund war es eine Aufgabe der vorliegenden Erfindung, dass das anzugebende Verfahren besonders prozesssicher durchführbar sein sollte und die Gesundheits- und Umweltbelastung möglichst gering sein sollte.

Eine Aufgabe der vorliegenden Erfindung war es dabei, dass die mit dem anzugebenden Verfahren hergestellten Kabelkerne in flexibler Weise herstellbar sein sollten, sodass das anzugebende Verfahren flexibel an die jeweiligen Prozessbedingungen in der Reifenfertigung angepasst werden kann. Vor diesem Hintergrund war es eine ergänzende Aufgabe, dass das anzugebende Verfahren effizient in bestehende Prozesse der Reifenfertigung integrierbar sein sollte.

Bei dem anzugebenden Verfahren war es eine Maßgabe, dass idealerweise nur solche Materialien eingesetzt werden sollten, die der Fachmann aus dem Bereich der Reifenfertigung aus anderen Fertigungsschritten ohnehin verfügbar hat.

Es war eine ergänzende Aufgabe der vorliegenden Erfindung, dass das anzugebende Verfahren idealerweise besonders kosten- und zeiteffizient durchführbar sein sollte, sodass insbesondere auch der Einsatz in der Serienproduktion von PKW-Reifen in einem industriellen Maßstab möglich wird.

Im Lichte der vorstehenden Aufgaben war es eine ergänzende Aufgabe der vorliegenden Erfindung, aufbauend auf dem anzugebenden Verfahren auch ein Verfahren für die Herstellung von Fahrzeugreifen anzugeben, welches den Schritt der Modifikation des Kabelkerns umfasst.

Für den Fachmann ist ersichtlich, dass eine weitere Aufgabe der vorliegenden Erfindung darin zu sehen ist, einen modifizierten Kabelkern anzugeben, welcher beim Einsatz in der Fertigung von Kautschukprodukten auch ohne den Einsatz von gesundheitsschädlichen Haftvermittlern eine besonders hohe Verbundfestigkeit mit dem Gummiwerkstoff erzielt.

Entsprechend war es eine sekundäre Aufgabe der vorliegenden Erfindung, zudem ein Kautschukprodukt, insbesondere ein Fahrzeugreifen, anzugeben, der die anzugebenden modifizierten Kabelkerne umfasst.

Zudem war es eine Aufgabe der vorliegenden Erfindung, eine Verwendung von nicht-metallischen Verstärkungsstreifen bei der Modifikation von Kabelkernen anzugeben.

Die Erfinder der vorliegenden Erfindung haben nunmehr erkannt, dass sich die vorstehend beschriebenen Aufgaben lösen lassen, wenn die auf der Oberfläche von Kabelkernen vorliegenden Rillen ausgenutzt werden, um darin nicht-metallische Verstärkungsstreifen zu platzieren wie es in den Ansprüchen definiert ist. Hierdurch wird es überraschenderweise möglich, einen modifizierten Kabelkern zu erhalten, welcher über eine ausgezeichnete Adhäsion an Gummiwerkstoffen verfügt, ohne dass hierfür weitere Haftvermittler notwendig wären.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter modifizierter Kabelkerne, Kautschukprodukte, Fahrzeugreifen und Verwendungen ergeben sich aus den Merkmalen bevorzugter Verfahren.

Die Erfindung betrifft ein Verfahren zur Modifikation eines Kabelkerns, insbesondere für den Einsatz in der Reifenfertigung, umfassend die folgenden Verfahrensschritte:
v1) Herstellen oder Bereitstellen eines Kabelkerns, umfassend ein Kernfilament und zumindest eine um das Kernfilament herum angeordnete Filamentlage, umfassend eine Vielzahl von Außenfilamenten, wobei die Oberfläche des Kabelkerns eine Vielzahl von Rillen aufweist, die durch die Außenfilamente der äußersten Filamentlage gebildet werden,
v2) Herstellen oder Bereitstellen eines oder mehrerer nicht-metallischer Verstärkungsstreifen, wobei zumindest ein nicht-metallischer Verstärkungsstreifen ausgewählt ist aus der Gruppe bestehend aus beschichteten Fasern und Kautschukstreifen, umfassend eine vulkanisierbare Kautschukmischung, und
v3) Anordnen des einen oder der mehreren nicht-metallische Verstärkungsstreifen in einer oder mehreren der Rillen der Oberfläche des Kabelkerns zum Erhalt eines modifizierten Kabelkerns, wobei der eine oder die mehreren nicht-metallischen Verstärkungsstreifen so um die äußere Filamentlage des Kabelkerns gewickelt sind, dass diese in den Rillen der Oberfläche des Kabelkerns angeordnet sind.

Das erfindungsgemäße Verfahren ist auf die Modifikation von Kabelkernen gerichtet. Diese Kabelkerne sind für den Einsatz in der Reifenfertigung geeignet, wodurch auch das Verfahren zur Modifikation der Kabelkerne an sich für den Einsatz in der Reifenfertigung besonders geeignet ist. Grundsätzlich ist jedoch festzustellen, dass das erfindungsgemäße Verfahren und die damit herstellbaren modifizierten Kabelkerne prinzipiell für sämtliche Anwendungen vorteilhaft sind, in denen Kabelkerne in einen Gummiwerkstoff eingebaut werden sollen.

In Verfahrensschritt v1) wird zunächst ein Kabelkern hergestellt oder bereitgestellt. In Übereinstimmung mit dem fachmännischen Verständnis umfasst ein solcher Kabelkern zumindest ein Kernfilament, bevorzugt genau ein Kernfilament, und um das Kernfilament herumgewickelt mehrere Filamentlagen, die jeweils eine Vielzahl, d. h. zwei oder mehr, Filamente umfassen, wobei diese Filamente der Filamentlagen in Abgrenzung zu dem Kernfilament als Außenfilamente bezeichnet werden. Bevorzugt ist für die meisten Fälle ein erfindungsgemäßes Verfahren, wobei die Außenfilamente zumindest einer der Filamentlagen, bevorzugt zumindest der äußeren Filamentlage, besonders bevorzugt sämtlicher Filamentlagen, um das Kernfilament bzw. die jeweils unterliegende Filamentlage gewickelt sind, wobei die Filamentlagen bevorzugt S- oder Z-verdreht sind.

Für den Fachmann ist ersichtlich, dass die Oberflächenstruktur entsprechender Kabelkerne im Wesentlichen durch die äußerste Filamentlage bestimmt wird. Die Außenfilamente der äußersten Filamentlage verlaufen im Wesentlichen parallel zueinander, wobei sich die Außenfilamente bei den meisten industriell relevanten Kabelkernen zudem mit ihrem jeweiligen Nachbarn berühren. Hierdurch bilden die Außenfilamente auf der Oberfläche des Kabelkerns eine Vielzahl von Rillen, d. h. Vertiefungen, die regelmäßig entlang der gesamten Länge des Kabelkerns parallel zu den Außenfilamenten um den Kabelkern herum verlaufen. In Übereinstimmung mit dem fachmännischen Verständnis bezeichnet der Ausdruck Rillen im Rahmen der vorliegenden Erfindung lediglich die auf der Oberfläche des Kabelkerns befindlichen Rillen und nicht etwa etwaige Zwischenräume zwischen den Außenfilamenten zweier benachbarter Filamentlagen bzw. zwischen den Außenfilamenten einer Filamentlage und dem innenliegenden Kernfilament.

Die Erfinder der vorliegenden Erfindung haben erkannt, dass sich überraschenderweise eben diese Rillen dafür nutzen lassen, einen modifizierten Kabelkern zu erhalten, welcher über ausgezeichnete Adhäsionseigenschaften an Gummiwerkstoffen verfügt. Hierfür ist es in Schritt v2) des erfindungsgemäßen Verfahrens notwendig, einen oder mehrere Verstärkungsstreifen herzustellen oder bereitzustellen, wobei es sich um nicht-metallische Verstärkungsstreifen handeln muss.

Diese nicht-metallischen Verstärkungsstreifen werden in dem erfindungsgemäßen Verfahren nämlich in den Rillen der Oberfläche des Kabelkerns, d. h. an spezifischen Stellen des Kabelkerns, angeordnet, um einen modifizierten Kabelkern zu erhalten. Hierdurch kann auf effiziente Weise ein modifizierter Kabelkern erhalten werden, dessen Adhäsion an Gummiwerkstoffen durch die nicht-metallischen Bestandteile auf seiner Oberfläche, d.h. im maßgeblichen Kontaktbereich mit dem Gummiwerkstoff, verbessert ist, da entsprechende nicht-metallischen Bestanteile, im Gegensatz zu Metallen, regelmäßig eine deutlich bessere Adhäsion an Gummiwerkstoffen zeigen.

Die Anordnung der nicht-metallischen Verstärkungsstreifen in den Rillen sorgt dabei zunächst für eine große Kontaktfläche zwischen den Außenfilamenten und dem nicht-metallischen Verstärkungsstreifen, sodass die nicht-metallischen Verstärkungsstreifen beispielsweise beim Einsatz von kautschukhaltigen Verstärkungsstreifen eine besonders gute Adhäsion an der Oberfläche des Kabelkerns zeigen. Zugleich ermöglicht die Anordnung in den Rillen der Oberfläche des Kabelkerns, d. h. entlang der Rillen der Oberfläche des Kabelkerns, eine gewisse Fixierung der nicht-metallischen Verstärkungsstreifen gegen ein Verrutschen entlang des Kabelkerns. Gerade durch die Wicklung der nicht-metallischen Verstärkungsstreifen in den Rillen um das Kernfilament, wird eine zusätzliche mechanische Verbindung zwischen den nicht-metallischen Verstärkungsstreifen und dem Kabelkern erzeugt.

Es handelt sich um ein erfindungsgemäßes Verfahren, wobei der eine oder die mehreren nicht-metallischen Verstärkungsstreifen so um die äußere Filamentlage des Kabelkerns gewickelt sind, dass diese in den Rillen der Oberfläche des Kabelkerns angeordnet sind.

Bevorzugt ist auch ein erfindungsgemäßes Verfahren, wobei der eine oder die mehreren nicht-metallischen Verstärkungsstreifen über die gesamte Länge des Kabelkerns in den Rillen der Oberfläche des Kabelkerns angeordnet werden.

Bevorzugt ist ebenfalls ein erfindungsgemäßes Verfahren, wobei das Anordnen des einen oder der mehreren nicht-metallischen Verstärkungsstreifen in den Rillen der Oberfläche des Kabelkerns so erfolgt, dass die nicht-metallischen Verstärkungsstreifen im Wesentlichen parallel zu den Außenfilamenten der äußersten Filamentlage verlaufen.

Für den Verfahrensschritt v3) des Anordnens gibt es nach Einschätzung der Erfinder dabei vor allen Dingen zwei besonders vielversprechende Verfahrensführungen.

In einer besonders bevorzugten Ausführungsform, die jedoch in den meisten Fällen wohl nur solchen Anwendern zugänglich ist, die fertigungstechnisch in der Lage sind, Kabelkerne selbst herzustellen, werden die nicht-metallischen Verstärkungsstreifen bereits während der Herstellung des Kabelkerns in den Rillen der Oberfläche des Kabelkerns angeordnet. In dieser Verfahrensführung erfolgt das Anordnen zeitgleich mit dem Erzeugen der äußeren Filamentlage, beispielsweise dadurch, dass die nicht-metallischen Verstärkungsstreifen gemeinsam mit den Außenfilamenten der äußersten Filamentlage um das Kernfilament bzw. um die Außenfilamente der unterliegenden Filamentlage herumgewickelt werden, so dass diese in den Rillen angeordnet sind. Hierdurch ist nicht nur eine besonders kosten- und zeiteffiziente Verfahrensführung möglich, sondern nach Einschätzung der Erfinder lassen sich mit einer entsprechenden Verfahrensführung auch besonders vorteilhafte modifizierte Kabelkerne erhalten, weil diese Verfahrensführung in einer besonders engen Verbindung zwischen den nicht-metallischen Verstärkungsstreifen und den Außenfilamenten der äußersten Filamentlage resultieren kann, insbesondere wenn die nicht-metallischen Verstärkungsstreifen teilweise zwischen den Außenfilamenten eingeklemmt und dadurch fixiert werden. Durch den inhärent starken Verbund zwischen den nicht-metallischen Verstärkungsstreifen und dem Kabelkern kann bei der weiteren Verarbeitung auch eine besonders hohe Verbundfestigkeit des Gesamtverbundes erhalten werden. Bevorzugt ist somit ein erfindungsgemäßes Verfahren, wobei der Kabelkern in Verfahrensschritt v1) hergestellt wird, wobei das Herstellen durch Wicklung der Außenfilamente der äußersten Filamentlage um das Kernfilament oder um die Außenfilamente der unterliegenden Filamentlage erfolgt, wobei das Anordnen des einen oder der mehreren nicht-metallischen Verstärkungsstreifen in den Rillen der Oberfläche des Kabelkerns zeitgleich mit der Wicklung der Außenfilamente der äußersten Filamentlage erfolgt.

Als Alternative zu der vorstehend beschriebenen Verfahrensführung kann ein erfindungsgemäßes Verfahren gesehen werden, bei dem das Anordnen der nicht-metallischen Verstärkungsstreifen erst nachträglich in einem bereits hergestellten Kabelkern erfolgt, beispielsweise indem dieser mit den nicht-metallischen Verstärkungsstreifen so umwickelt wird, dass diese in den Rillen angeordnet sind und sich durch die Wicklung eine zusätzliche mechanische Verbindung zwischen dem nicht-metallischen Verstärkungsstreifen und dem Kabelkern ergibt. Dieses Verfahren kann nach Einschätzung der Erfinder zwar in einigen Fällen in einer geringeren Verbundfestigkeit zwischen den nicht-metallischen Verstärkungsstreifen und dem Kabelkern resultieren als die vorstehend beschriebene Einarbeitung während der Herstellung, jedoch ist diese Verfahrensführung nach Einschätzung der Erfinder deutlich einfacher und erfordert regelmäßig weniger apparativen Aufwand, insbesondere weil die Kabelkerne hierfür von externen Zulieferern bezogen werden können und nicht eigens hergestellt werden müssen. Bevorzugt ist somit alternativ ein erfindungsgemäßes Verfahren, wobei das Anordnen des einen oder der mehreren nicht-metallischen Verstärkungsstreifen in den Rillen der Oberfläche des Kabelkerns nach der Herstellung oder Bereitstellung des Kabelkerns erfolgt.

Nach Einschätzung der Erfinder der vorliegenden Erfindung sind im erfindungsgemäßen Verfahren vorteilhafterweise eine breite Palette an nicht-metallischen Verstärkungsstreifen einsetzbar, wobei die so erhaltenen modifizierten Kabelkerne, welche metallische und nicht-metallische Bestandteile umfassen, nach Einschätzung der Erfinder im Wesentlichen in allen Fällen eine bessere Haftung an Gummiwerkstoffen zeigen als die isolierten metallischen Kabelkerne. Nichtsdestotrotz ist es den Erfindern der vorliegenden Erfindung gelungen, besonders geeignete Materialien für die nicht-metallischen Verstärkungssteifen zu identifizieren, mit denen sich modifizierte Verstärkungskorde mit ausgezeichneten Eigenschaften erhalten lassen, wobei die bevorzugten Materialien insbesondere auch wegen ihrer vorteilhaften Verarbeitungseigenschaften gewählt wurden. Neben besonders geeigneten Materialklassen konnten dabei auch in den jeweiligen Klassen besonders vorteilhafte Materialien identifiziert werden. Insoweit ist es ganz besonders bevorzugt, wenn die nicht-metallischen Verstärkungsstreifen aus den jeweiligen Materialien bestehen.
erfindungsgemäß ist ein erfindungsgemäßes Verfahren, wobei zumindest ein nicht-metallischer Verstärkungsstreifen, bevorzugt sämtliche nicht-metallischen Verstärkungsstreifen, ausgewählt ist aus der Gruppe bestehend aus beschichteten Fasern, insbesondere Glasfasern, Naturfasern und Kunststofffasern, und Kautschukstreifen, umfassend eine vulkanisierbare Kautschukmischung,
bevorzugt ausgewählt ist aus der Gruppe bestehend aus mit Ruß, mit einer vulkanisierbaren Kautschukmischung oder mit einer Haftaktivierung beschichteten Fasern, insbesondere Naturfasern oder Kunststofffasern, und Kautschukstreifen, umfassend eine vulkanisierbare Kautschukmischung,
besonders bevorzugt ausgewählt ist aus der Gruppe bestehend aus mit Ruß beschichteten Kunststofffasern, insbesondere Polyesterfasern und Nylonfasern, mit einer Haftaktivierung beschichteten Kunststofffasern, insbesondere Polyesterfasern und Nylonfasern, und Kautschukstreifen, umfassend eine vulkanisierbare Kautschukmischung,
ganz besonders bevorzugt ausgewählt ist aus der Gruppe bestehend aus mit einer Haftaktivierung beschichteten Kunststofffasern, insbesondere Polyesterfasern und Nylonfasern, und Kautschukstreifen, umfassend eine vulkanisierbare Kautschukmischung,
wobei die Haftaktivierung bevorzugt ausgewählt ist aus der Gruppe bestehend aus RFL-Dips, umfassend Resorcin, Formaldehyd und Latex, und wässrigen Dispersionen, wobei die wässrigen Dispersionen im Wesentlichen frei sind von freiem Resorcin sowie Resorcin-Vorkondensaten, insbesondere Resorcin-Formaldehyd-Vorkondensaten, und frei sind von freiem Formaldehyd sowie Formaldehyd freisetzenden Substanzen.

In Übereinstimmung mit dem fachmännischen Verständnis umfasst die bevorzugte Ausführungsform im Falle von beschichteten Fasern dabei auch den Einsatz von beschichteten Garnen oder Geweben entsprechender Fasern.

Nach Einschätzung der Erfinder eignen sich für das erfindungsgemäße Verfahren insbesondere beschichtete Fasern, die gegenüber unbeschichteten Fasern mit Blick auf die Adhäsion des modifizierten Kabelkerns an Gummiwerkstoffen überlegen sind sowie unvulkanisierte Kautschukstreifen, d. h. strangförmige Materialstreifen, welche eine vulkanisierbare Kautschukmischung umfassen.

Als besonders bevorzugte Beschichtungen für die Fasern haben sich dabei neben Beschichtungen mit Ruß auch Beschichtungen aus einer vulkanisierbaren Kautschukmischung erwiesen. Der Fachmann erkennt, dass sich bei den mit einer vulkanisierbaren Kautschukmischung beschichteten Fasern der Kreis zu den ebenfalls bevorzugten Kautschukstreifen schließt. Als ganz besonders bevorzugte Ausführungsform können jedoch solche Fasern gesehen werden, die mit einer spezifischen Haftaktivierung beschichtet sind. Entsprechende Haftaktivierung für Fasern sind dem Fachmann dabei bekannt, wobei insbesondere sogenannte RFL-Dips, umfassend Resorcin, Formaldehyd und Latex, zum Einsatz kommen. Entsprechende Haftaktivierungen von Fasern führen nach Einschätzung der Erfinder durch die besonders hohe Adhäsion der Fasern und die spezifische Kompatibilität mit üblichen Kautschukmischungen zu besonders festen Verbünden. Trotz der Bekanntheit von RFL-Dips ist nach Einschätzung der Erfinder vor allen Dingen der Einsatz von bestimmten wässrigen Dispersionen besonders vorteilhaft, die sich als umweltfreundlichere und weniger gesundheitsschädliche Alternative zu RFL-Dips erwiesen haben und die beispielsweise in der WO 2019/015792 A1 sowie der EP 3702521 A1, der EP 3702522 A1 und der EP 3702523 A1 offenbart werden. Unter den Fasern sind insbesondere Kunststofffasern wie Polyesterfasern, beispielsweise Polyethylenterephthalat, und Nylonfasern bevorzugt.

Im Lichte der vorstehenden Ausführungen ist für den Fachmann ersichtlich, dass solche nicht-metallischen Verstärkungsstreifen, welche eine vulkanisierbare Kautschukmischung umfassen, beispielsweise in Form einer mit einer vulkanisierbaren Kautschukmischung beschichteten Faser, für viele Ausgestaltungen des erfindungsgemäßen Verfahrens als vorteilhaft angesehen werden können. Ein Grund für diese Bevorzugung liegt auch darin, dass entsprechende nicht-metallische Verstärkungsstreifen nach der Applikation in den Rillen der Oberfläche des modifizierten Kabelkerns weiter ausgeformt werden können, beispielsweise indem sie zu einer Maximierung der Kontaktfläche in die Rillen gedrückt werden, wodurch vorteilhafterweise auch eine glattere Oberfläche des modifizierten Kabelkerns erzeugt werden kann. Hierdurch wird die Adhäsion zwischen den nicht-metallischen Verstärkungsstreifen und dem Kabelkern verbessert. Zudem ist es auch möglich, die an der Oberfläche des Kabelkerns freiliegenden metallischen Bestandteile weitgehend mit der vulkanisierbaren Kautschukmischung zu ummanteln, sodass die freiliegende Oberfläche dieser metallischen Bereiche, die mit den in Kautschukprodukten eingesetzten Gummiwerkstoffen zumeist weniger kompatibel sind, reduziert werden kann. In einer besonders bevorzugten Ausführungsform kann das Ausformen dadurch erfolgen, dass ein Kabelkern, in dessen Rillen entsprechende nicht-metallische Verstärkungsstreifen mit einer vulkanisierbaren Kautschukmischung angeordnet sind, durch ein Ausformwerkzeug mit einer ringförmigen Ausnehmung, beispielsweise ein Rohr, geführt wird, dessen Innendurchmesser so bemessen ist, dass die nicht-metallischen Verstärkungsstreifen in die Rillen gedrückt werden und am Ende ein modifizierter Kabelkern erhalten wird, dessen Außenform im Wesentlichen durch die Form der ringförmigen Ausnehmung bedingt ist. Bevorzugt ist entsprechend ein erfindungsgemäßes Verfahren, wobei zumindest ein nicht-metallischer Verstärkungsstreifen, bevorzugt sämtliche nicht-metallischen Verstärkungsstreifen, eine vulkanisierbare Kautschukmischung umfasst, wobei das Verfahren zusätzlich den folgenden Verfahrensschritt umfasst:
v4) Ausformen der in den Rillen der Oberfläche des modifizierten Kabelkerns angeordneten nicht-metallischen Verstärkungsstreifen zur Anpassung der nicht-metallischen Verstärkungsstreifen an die Form der Rillen und/oder zum Erzeugen einer glatteren Oberfläche des modifizierten Kabelkerns und/oder zur zumindest teilweisen Ummantelung, bevorzugt zur vollständigen Ummantelung, des Kabelkerns mit der vulkanisierbaren Kautschukmischung,
wobei das Ausformen bevorzugt mit einem Ausformwerkzeug erfolgt, wobei das Ausformen besonders bevorzugt dadurch erfolgt, dass der modifizierte Kabelkern durch ein Ausformwerkzeug mit einer ringförmigen Ausnehmung geführt wird, dessen Innendurchmesser im Wesentlichen der Einhüllenden des Querschnitts des Kabelkerns entspricht.

Für bestimmte Anwendungen kann es vorteilhaft sein, wenn das Kernfilament selbst mehrteilig ausgebildet ist, wobei diese Teile regelmäßig durch eine stoffschlüssige Verbindung verbunden sind. Bevorzugt ist in diesem Fall ein erfindungsgemäßes Verfahren, wobei das Kernfilament zwei oder mehr miteinander verdrehte Teilfilamenten umfasst, wobei die Teilfilamente bevorzugt miteinander stoffschlüssig verbunden sind, bevorzugt durch ein Schweißverfahren.

Auch wenn das erfindungsgemäße Verfahren für Kabelkerne mit lediglich einer äußeren Filamentlage einsetzbar ist, sind mit Blick auf die mechanischen Eigenschaften der Kabelkerne regelmäßig solche Aufbauten bevorzugt, in denen mehrere Filamentlagen vorgesehen sind. Bevorzugt ist entsprechend ein erfindungsgemäßes Verfahren, wobei um das Kernfilament herum zwei oder mehrere, bevorzugt drei oder mehrere, Filamentlagen angeordnet sind, die in radialer Richtung übereinander angeordnet sind.

Die Zahl der Außenfilamente pro Filamentlage wird im Wesentlichen durch die Zahl der Filamentlagen und den Durchmesser der einzelnen Außenfilamente bestimmt, wobei eine höhere Zahl von Filamentlagen in der äußersten Filamentlage zumeist in einer höheren Zahl von Außenfilamenten resultiert. Bevorzugt ist aber insoweit ein erfindungsgemäßes Verfahren, wobei die äußerste Filamentlage 6 oder mehr, bevorzugt 8 oder mehr, besonders bevorzugt 12 oder mehr, ganz besonders bevorzugt 16 oder mehr, Außenfilamente umfasst.

Auch wenn es prinzipiell möglich wäre, die Außenfilamente der äußersten Filamentlage nicht auf Stoß zu legen, ist dies insbesondere mit Blick auf die Fertigung und die Haltbarkeit des dadurch gewonnenen Kabelkerns regelmäßig nicht bevorzugt, zumindest dann nicht, wenn in den Zwischenräumen bzw. zwischen den Außenfilamenten nicht unmittelbar die nicht-metallischen Verstärkungsstreifen angeordnet werden, wie es vorstehend für die bevorzugte Herstellung modifizierter Kabelkerne offenbart ist. Bevorzugt ist daher für die meisten Fälle ein erfindungsgemäßes Verfahren, wobei die Außenfilamente der äußerste Filamentlage ihr jeweiligen Nachbarn berühren, so dass eine dichte Filamentlage erhalten wird und der eine oder die mehreren nicht-metallische Verstärkungsstreifen nicht das Kernfilament oder die inneren Filamentlagen berühren.

Auch wenn es grundsätzlich denkbar ist, Kabelkerne aus anderen Materialien zu fertigen, ist die überwiegende Zahl der relevanten Anwendungsfälle jedoch für Kabelkerne anzunehmen, die zumindest hinsichtlich der Außenfilamente der äußersten Lage aus einem metallischen Werkstoff bestehen. Dies gilt insbesondere deshalb, da bei anderen Kabelkernen die Problematik mit einer verringerten Adhäsion an Gummiwerkstoffen zumeist weniger ausgeprägt ist. Nach Einschätzung der Erfinder der vorliegenden Erfindung lassen sich in synergistischer Weise besonders vorteilhafte modifizierte Kabelkerne erhalten, wenn die metallischen Teile mit einer kupferbasierten Beschichtung versehen sind, da sich hierdurch die Adhäsion an den nicht-metallischen Verstärkungsstreifen verbessern lässt. Bevorzugt ist deshalb für die meisten Fälle ein erfindungsgemäßes Verfahren, wobei das Kernfilament und/oder die Außenfilamente, bevorzugt sämtliche Filamente, aus einem metallischen Werkstoff, bevorzugt aus Stahl, ausgebildet sind, wobei das Kernfilament und/oder die Außenfilamente, bevorzugt die Außenfilamente der äußersten Filamentlage, mit Kupfer und/oder einer Kupferlegierung beschichtet sind.

Die nicht-metallischen Verstärkungsstreifen, die im erfindungsgemäßen Verfahren einzusetzen sind, können hergestellt oder bereitgestellt werden. Die Herstellung ist hierbei gegenüber einer Bereitstellung, beispielsweise durch Zukauf von einem Zulieferer, insbesondere dann bevorzugt, wenn diese Materialien im Rahmen der Herstellung des Kabelkerns eingearbeitet werden sollen. In allen Fällen kann die Herstellung bevorzugt durch Tauchbeschichtung von Fasern oder durch Extrusion einer vulkanisierbaren Kautschukmischung in Streifenform, d. h. als strangförmiges Material, erfolgen. Bevorzugt ist somit ein erfindungsgemäßes Verfahren, wobei der eine oder die mehreren nicht-metallischen Verstärkungsstreifen durch Tauchbeschichtung oder Extrusion, bevorzugt durch Tauchbeschichtung einer Faser mit Ruß oder einer Haftaktivierung oder durch Extrusion einer vulkanisierbaren Kautschukmischung hergestellt werden.

Es kann als Vorteil des erfindungsgemäßen Verfahrens gesehen werden, dass das Ausmaß der Modifizierung an die entsprechenden Bedürfnisse der späteren Anwendung angepasst werden kann. Nach Einschätzung der Erfinder ist es jedoch besonders bevorzugt, wenn in jeder Rille der Oberfläche des Kabelkerns ein separater nicht-metallischer Verstärkungsstreifen angeordnet wird. Bevorzugt ist demgemäß ein erfindungsgemäßes Verfahren, wobei in jeder Rille der Oberfläche des Kabelkerns ein separater nicht-metallischer Verstärkungsstreifen angeordnet wird.

Nach Einschätzung der Erfinder ergeben sich besonders interessante und vielseitige Adhäsionseigenschaften der Kabelkorde insbesondere dann, wenn in den Rillen nicht durchgehend die gleichen nicht-metallischen Verstärkungsstreifen angeordnet sind, sondern benachbarte Verstärkungsstreifen aus unterschiedlichen Materialien ausgebildet werden. Bevorzugt ist demnach ein erfindungsgemäßes Verfahren, wobei in zwei benachbarten Rillen der Oberfläche des Kabelkerns jeweils ein nicht-metallischer Verstärkungsstreifen angeordnet ist, wobei die nicht-metallischen Verstärkungsstreifen aus unterschiedlichen Materialien bestehen.

Den Erfindern der vorliegenden Erfindung ist es gelungen, für die im erfindungsgemäßen Verfahren einzusetzenden nicht-metallischen Verstärkungsstreifen und deren Anordnung besonders bevorzugte Parameter zu identifizieren.

Bevorzugt ist nämlich zunächst ein erfindungsgemäßes Verfahren, wobei die nicht-metallischen Verstärkungsstreifen einen Durchmesser im Bereich von 0,05 bis 2,0 mm, bevorzugt im Bereich von 0,1 bis 1,5 mm, besonders bevorzugt im Bereich von 0,15 bis 1,0 mm, aufweist, und/oder wobei sich die nicht-metallischen Verstärkungsstreifen im modifizierten Kabelkern nicht berühren. Bevorzugt ist auch ein erfindungsgemäßes Verfahren, wobei das Anordnen des einen oder der mehreren nicht-metallischen Verstärkungsstreifen in den Rillen der Oberfläche des Kabelkerns so erfolgt, dass in zumindest 40 %, bevorzugt zumindest 60 %, besonders bevorzugt zumindest 80 %, ganz besonders bevorzugt zumindest 90 % der Rillen ein nicht-metallischer Verstärkungsstreifen angeordnet ist.

Über die vorstehenden Ausführungen hinaus ist es den Erfindern der vorliegenden Erfindung auch gelungen, für den im erfindungsgemäßen Verfahren einzusetzenden Kabelkern einen besonders günstigen Aufbau zu identifizieren, welcher mit den im erfindungsgemäßen Verfahren zu applizierenden nicht-metallischen Verstärkungsstreifen besonders gut harmoniert und mit denen sich besonders leistungsfähige modifizierte Kabelkerne erhalten lassen, welche insbesondere für den Einsatz in Fahrzeugluftreifen besonders geeignet sind. Bevorzugt ist nämlich ein erfindungsgemäßes Verfahren, wobei das Kernfilament einen Durchmesser im Bereich von 0,5 bis 8,5 mm, bevorzugt im Bereich von 0,8 bis 7,5 mm, besonders bevorzugt im Bereich von 1,0 bis 6,5 mm, aufweist, und/oder wobei die Außenfilamente einen Durchmesser im Bereich von 0,30 bis 4,0 mm, bevorzugt im Bereich von 0,5 bis 3,5 mm, besonders bevorzugt im Bereich von 0,6 bis 3,0 mm, aufweist, und/oder wobei der Kabelkern einen Durchmesser im Bereich von 0,8 bis 45,0 mm, bevorzugt im Bereich von 1,3 bis 40,0 mm, besonders bevorzugt im Bereich von 1,8 bis 38,0 mm, aufweist.

Die Erfindung betrifft zudem ein Verfahren zur Herstellung eines Fahrzeugreifens, insbesondere eines Fahrzeugluftreifens, umfassend die Verfahrensschritte des erfindungsgemäßen Verfahrens zur Modifikation von Kabelkernen, sowie die Verfahrensschritte:
v5) Herstellen eines Reifenrohlings umfassend den modifizierten Kabelkern in zumindest einem Bauteil, bevorzugt im Reifenwulst, besonders bevorzugt als Wulstkern, wobei der modifizierte Kabelkern im Reifenrohling zumindest teilweise von einer vernetzbaren Gummierungsmischung umgeben ist, und
v6) Vulkanisieren des Reifenrohlings zur Herstellung eines Fahrzeugreifens, bevorzugt in einer Vulkanisationsform.

Das erfindungsgemäße Verfahren zur Herstellung eines Fahrzeugreifens ist bevorzugt, weil durch den Einsatz der mit dem erfindungsgemäßen Verfahren hergestellten modifizierten Kabelkerne und deren Verarbeitung in einem Reifenrohling mittels Vulkanisation solche Fahrzeugreifen erhalten werden können, bei denen der Kabelkern eine besonders feste und haltbare Verbindung zu dem ihn umgebenden Gummiwerkstoff, aufweist, sodass beispielsweise die entsprechenden Fahrzeugreifen mit einem erfindungsgemäßen modifizierten Kabelkern im Wulstbereich auch bei starker mechanischer Belastung zuverlässig auf der Felge verbleiben.

Grundsätzlich ist es als Vorteil des erfindungsgemäßen Verfahrens zu sehen, dass mit dem erfindungsgemäßen Verfahren modifizierte Kabelkerne hergestellt werden können, die im Wesentlichen gegenüber allen im Reifenrohling eingesetzten vernetzbaren Gummierungsmischungen und den daraus herstellbaren Gummiwerkstoffen eine verbesserte Adhäsion zeigen. Trotzdem schlagen die Erfinder der vorliegenden Erfindung besonders geeignete Komponenten für die vernetzbar Gummierungsmischung vor, mit denen sich mit dem erfindungsgemäßen Verfahren ausgezeichnete Adhäsionseigenschaften zu den modifizierten Kabelkernen einstellen lassen. Bevorzugt ist insoweit ein erfindungsgemäßes Verfahren, wobei die vernetzbaren Gummierungsmischung wenigstens einen Dienkautschuk umfasst, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Dienkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Bevorzugt ist zudem ein erfindungsgemäßes Verfahren, wobei die vernetzbare Gummierungsmischung 0,1 bis 100 phr eines oder mehrerer Füllstoffe umfasst, wobei die Füllstoffe ausgewählt sind aus der Gruppe bestehend aus polaren und unpolaren Füllstoffen, bevorzugt ausgewählt sind aus der Gruppe bestehend aus Ruß, Aluminiumhydroxid, Titandioxid, Magnesiumoxid, amorphem Siliciumdioxid, insbesondere gefälltem Siliciumdioxid, und Schichtsilikaten, besonders bevorzugt ausgewählt sind aus der Gruppe bestehend aus Ruß und amorphem Siliciumdioxid.

Die vorstehend genannten Bestandteile der vernetzbaren Gummierungsmischung sind dabei auch mögliche Bestandteile der vulkanisierbaren Kautschukmischung, welche als nicht-metallische Verstärkungsstreifen eingesetzt werden können, und auch für diese vulkanisierbaren Kautschukmischungen bevorzugt.

Auch wenn es grundsätzlich möglich ist, die mit dem erfindungsgemäßen Verfahren hergestellten modifizierten Kabelkerne für beliebige Komponenten des Reifens einzusetzen, wird jedoch die Anwendung im Seitenbereich, insbesondere im Wulstbereich nach Einschätzung der Erfinder zumeist der relevanteste Einsatzort sein. Bevorzugt ist daher ein erfindungsgemäßes Verfahren zur Herstellung eines Fahrzeugreifens, wobei der Reifenrohling zumindest zwei modifizierte Kabelkerne umfasst, wobei die modifizierten Kabelkerne bevorzugt im Seitenwandbereich angeordnet sind, wobei die modifizierten Kabelkerne besonders bevorzugt vollständig von einer vernetzbaren Gummierungsmischung umgeben sind, wobei die modifizierten Kabelkerne besonders bevorzugt im Wulst angeordnet sind.

Auch wenn es prinzipiell denkbar wäre, die vernetzbare Gummierungsmischung, die den modifizierten Kabelkern im Reifenrohling umgibt und die bevorzugt als nicht-metallischen Verstärkungsstreifen einzusetzende vulkanisierbare Kautschukmischung aus der gleichen Mischung auszubilden, ist dies weniger bevorzugt. In diesem Fall würde die verbesserte Adhäsion vor allem aus der mechanischen Umwicklung des Kabelkerns folgen, wobei die Kompatibilität der vulkanisierbaren Kautschukmischung mit der vernetzbaren Gummierungsmischung auf der anderen Seite erwartungsgemäß hoch wäre.

Für viele Anwendungen ist es jedoch besonders bevorzugt, unterschiedliche Mischungen einzusetzen, wobei die vulkanisierbare Kautschukmischung, die als Teil des nicht-metallischen Verstärkungsstreifens am Kabelkern anliegt, vorteilhafterweise so ausgestaltet werden kann, dass sie eine maximale Adhäsion am Kabelkern zeigt, wohingegen die vulkanisierbare Kautschukmischung im Fahrzeugreifenrohling vor allem auf die für den Einsatz im Fahrzeugreifen benötigten physikalisch-chemischen Eigenschaften hin optimiert werden kann. In einem entsprechenden Aufbau wird regelmäßig ein besonders günstiges Verhältnis aus Verbundfestigkeit und vorteilhaften physikalisch-chemischen Eigenschaften des mittels Vulkanisation erhaltenen Fahrzeugreifens erzielt. Bevorzugt ist deshalb ein erfindungsgemäßes Verfahren zur Herstellung eines Fahrzeugreifens, wobei die den modifizierten Kabelkern im Reifenrohling umgebende vernetzbare Gummierungsmischung sich von der im modifizierten Kabelkern enthaltenen vulkanisierbaren Kautschukmischung unterscheidet, insbesondere hinsichtlich der Zusammensetzung der jeweiligen Mischung.

Im Lichte der vorstehenden Ausführungen ist für den Fachmann ersichtlich, dass es ganz besonders vorteilhaft ist, wenn kein separater Haftvermittler eingesetzt wird, da dieser beim Einsatz der im erfindungsgemäßen Verfahren modifizierten Kabelkern regelmäßig ohnehin nicht benötigt würde. Bevorzugt ist deshalb ein erfindungsgemäßes Verfahren zur Herstellung eines Fahrzeugreifens, wobei der modifizierte Kabelkern im Reifenrohling ohne Einsatz eines separaten Haftvermittlers, insbesondere ohne separate Beschichtung mit einem Haftvermittler, eingesetzt wird.

Der Fachmann erkennt, dass nicht nur das erfindungsgemäße Verfahren zum Modifizieren der Kabelkerne vorteilhaft ist, sondern dass sich auch für die mit diesem Verfahren hergestellten Kabelkerne, d. h. Kabelkerne in deren Rillen der Oberfläche nicht-metallische Verstärkungsstreifen angeordnet sind, die vorstehend beschriebenen Vorteile ergeben, insbesondere hinsichtlich der ausgezeichneten Adhäsion an Gummiwerkstoffen, die auch ohne den Einsatz potentiell gesundheitsschädlicher Haftvermittler erreicht werden kann. Die Erfindung betrifft deshalb auch einen modifizierten Kabelkern, bevorzugt hergestellt oder herstellbar mit einem erfindungsgemäßen Verfahren, umfassend ein Kernfilament und um das Kernfilament herum angeordnet zumindest eine Filamentlage, umfassend eine Vielzahl von Außenfilamenten, wobei die Oberfläche des modifizierten Kabelkerns eine Vielzahl von Rillen aufweist, die durch die Außenfilamente der äußersten Filamentlage gebildet werden, wobei in den Rillen der Oberfläche des modifizierten Kabelkerns ein oder mehrere nicht-metallische Verstärkungsstreifen angeordnet sind, wobei zumindest ein nicht-metallischer Verstärkungsstreifen ausgewählt ist aus der Gruppe bestehend aus beschichteten Fasern und Kautschukstreifen, umfassend eine vulkanisierbare Kautschukmischung, wobei der eine oder die mehreren nicht-metallischen Verstärkungsstreifen so um die äußere Filamentlage des Kabelkerns gewickelt sind, dass diese in den Rillen der Oberfläche des Kabelkerns angeordnet sind.

Da erfindungsgemäße modifizierte Kabelkerne für den Einsatz in Kautschukprodukten vorgesehen und bestimmt sind bzw. bei diesem Einsatz die Vorteile des erfindungsgemäßen modifizierten Kabelkerns besonders ausgeprägt zum Tragen kommen, ist für den Fachmann klar, dass die Erfindung auch ein entsprechendes Kautschukprodukt betrifft, welches den Kabelkern umfasst, und welches über eine vorteilhaft erhöhte Verbundfestigkeit, insbesondere im Grenzbereich zwischen dem Gummiwerkstoff und dem modifizierten Kabelkern verfügt. Die Erfindung betrifft entsprechend zudem ein Kautschukprodukt, insbesondere Luftfeder, umfassend den erfindungsgemäßen modifizierten Kabelkern in zumindest einem Bauteil, wobei der modifizierte Kabelkern im Kautschukprodukt zumindest teilweise von einer vernetzten Gummierungsmischung umgeben ist und wobei eine gegebenenfalls im modifizierten Kabelkern enthaltene vulkanisierbare Kautschukmischung vulkanisiert vorliegt.

Ein besonders bevorzugtes erfindungsgemäßes Kautschukprodukt sind dabei Fahrzeugreifen, beispielsweise für PKW oder LKW, wobei jedoch auch die Eignung für andere anspruchsvolle Reifenanwendungen, beispielsweise im landwirtschaftlichen oder militärischen Bereich, gegeben ist. Bevorzugt ist insofern ein erfindungsgemäßes Kautschukprodukt, wobei das Kautschukprodukt ein Fahrzeugreifen, bevorzugt ein PKW oder LKW Reifen ist, umfassend den modifizierten Kabelkern im Reifenwulst, bevorzugt als Wulstkern.

Die Erfindung betrifft ebenfalls einen Fahrzeugreifen, bevorzugt hergestellt oder herstellbar mit dem erfindungsgemäßen Verfahren zur Herstellung eines Fahrzeugreifens, und/oder umfassend den erfindungsgemäßen modifizierten Kabelkern in zumindest einem Bauteil, bevorzugt im Reifenwulst, besonders bevorzugt als Wulstkern, wobei der modifizierte Kabelkern im Fahrzeugreifen zumindest teilweise von einer vernetzten Gummierungsmischung umgeben ist und wobei eine gegebenenfalls im modifizierten Kabelkern enthaltene vulkanisierbare Kautschukmischung vulkanisiert vorliegt. Bevorzugt sind hierbei insbesondere PKW- und LKW-Reifen, sowie Reifen für landwirtschaftliche, forstwirtschaftliche und militärische Fahrzeuge.

Im Lichte der vorstehenden Ausführungen ist auch die überraschend vorteilhafte Verwendung von nicht-metallischen Verstärkungsstreifen in den Rillen der Oberfläche eines Kabelkerns ein Teil der Erfindung, da durch diese Verwendung überraschenderweise die Adhäsion des derart modifizierten Kabelkerns an Gummiwerkstoffen verbessert werden kann, wie es vorstehend offenbart ist. Die Erfindung betrifft abschließend deshalb auch die Verwendung von nicht-metallischen Verstärkungsstreifen in den an der Oberfläche eines Kabelkerns durch die Außenfilamente der äußersten Filamentlage gebildeten Rillen zur Verbesserung der Adhäsion von Gummiwerkstoffen am Kabelkern, wobei zumindest ein nicht-metallischer Verstärkungsstreifen ausgewählt ist aus der Gruppe bestehend aus beschichteten Fasern und Kautschukstreifen, umfassend eine vulkanisierbare Kautschukmischung, wobei die nicht-metallischen Verstärkungsstreifen so um die äußere Filamentlage des Kabelkerns gewickelt werden, dass diese in den Rillen der Oberfläche des Kabelkerns angeordnet sind.

Nachfolgend werden bevorzugte Ausführungsformen der Erfindung unter Bezugnahme auf die beiliegenden Zeichnungen näher erläutert und beschrieben. Dabei zeigen:
- Fig. 1: eine schematische Ablaufdarstellung des erfindungsgemäßen Verfahrens zur Modifikation eines Kabelkerns in einer ersten bevorzugten Ausführungsform im Querschnitt durch einen Kabelkern;
- Fig. 2: eine schematische Ablaufdarstellung des erfindungsgemäßen Verfahrens zur Modifikation eines Kabelkerns in einer zweiten bevorzugten Ausführungsform im Querschnitt durch einen Kabelkern; und
- Fig. 3: eine schematische Ablaufdarstellung des erfindungsgemäßen Verfahrens zur Modifikation eines Kabelkerns in einer dritten bevorzugten Ausführungsform im Querschnitt durch einen Kabelkern.

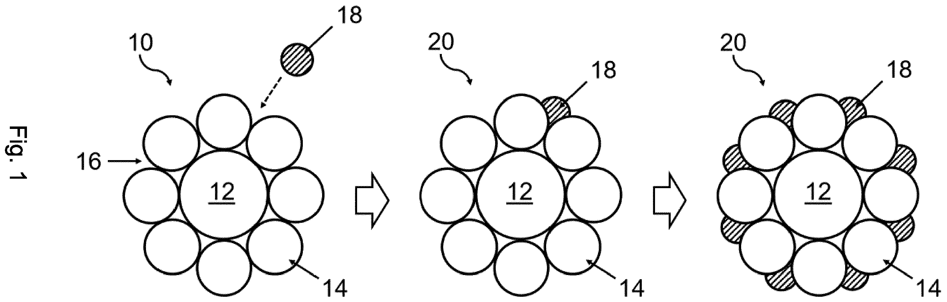

Fig. 1 zeigt in drei Stufen eine schematische Visualisierung des erfindungsgemäßen Verfahrens zur Modifikation eines Kabelkerns 10 in einer ersten bevorzugten Ausführungsform, wobei der Kabelkern 10 und die nicht-metallischen Verstärkungsstreifen 18 aus Gründen der Übersichtlichkeit im Querschnitt dargestellt sind. Hierbei wird ein Kabelkern 10 bereitgestellt, welcher ein Kernfilament 12 und eine um das Kernfilament 12 herum angeordnete Filamentlage umfasst, wobei die Filamentlage, welche in diesem Fall automatisch auch die äußerste Filamentlage ist, durch acht Außenfilamente 14 gebildet wird, die das Kernfilament 12 gleichmäßig umgeben.

Auf der Oberfläche des Kabelkerns 10 ergeben sich durch die Anordnung der Außenfilamente 14 insgesamt acht Rillen 16. Das Kernfilament 12 ist im gezeichneten Beispiel einteilig ausgebildet und die Außenfilamente 14 sind um das Kernfilament 12 gewickelt (S-verdreht). Die Außenfilamente 14 der äußeren Filamentlage berühren jeweils ihren Nachbarn, sodass eine dichte Filamentlage erhalten wird. Im gezeigten Beispiel sind sämtliche der Filamente, d. h. das Kernfilament 12 und die Außenfilamente 14, aus Stahl ausgebildet und mit einer zweilagigen Beschichtung aus einer ersten Kupferschicht und einer darüber liegenden Bronzebeschichtung beschichtet.

Auf dem bereitgestellten Kabelkern 10 wird in der mittleren Abbildung nunmehr ein nicht-metallischer Verstärkungsstreifen 18 angeordnet, wobei das Anordnen in einer Rille 16 in der Oberfläche des Kabelkerns 10 erfolgt, sodass ein modifizierter Kabelkern 20 erhalten wird. Das Anordnen erfolgt hierbei nach der Herstellung des Kabelkerns 10. In dem in Fig. 1 gezeigten Beispiel handelt es sich bei dem nicht-metallischen Verstärkungsstreifen 18 um ein mit Nylongarn, welches mittels Tauchbeschichtung mit Ruß beschichtet wurde. Dieses beschichtete Garn wird über die gesamte Länge des Kabelkerns 10 in der entsprechenden Rille 16 angeordnet, sodass es im Wesentlichen parallel zu den Außenfilamenten 14 verläuft, die die entsprechende Rille 16 bilden. Hierbei ist der nicht-metallische Verstärkungsstreifen 18, da er der Wicklung folgt, ebenfalls um den Kabelkern 10 herum gewickelt, wodurch sich eine zusätzliche mechanische Verbindung ergibt.

In einem weiteren Verfahrensschritt werden nunmehr weitere nicht-metallische Verstärkungsstreifen 18 in den weiteren Rillen 16 auf der Oberfläche des Kabelkerns 10 angeordnet, sodass in rechten Abbildung der in Fig. 1 gezeigten Ausführungsform am Ende sämtliche Rillen 16 mit entsprechenden nicht-metallischen Verstärkungsstreifen 18 belegt sind. In der dargestellten Ausführungsform alternieren die nicht-metallische Verstärkungsstreifen 18 verwendeten Materialien dabei zwischen dem wie vorstehend beschriebenen beschichteten Nylon und einem mit einem RFL-Dip beschichteten Polyester-Garn (PET), wodurch ein besonders leistungsfähiger modifizierter Kabelkern 20 erhalten wird.

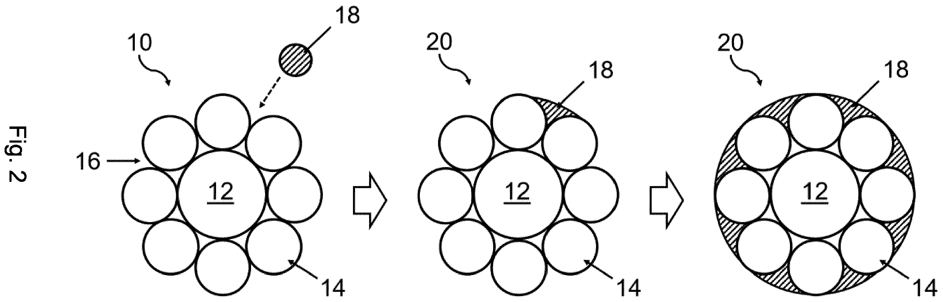

Die in Fig. 2 schematisch dargestellte Verfahrensführung des erfindungsgemäßen Verfahrens entspricht in ihrem Grundaufbau dem in Fig. 1 gezeigten Verfahren. In Fig. 2 wird jedoch als nicht-metallischer Verstärkungsstreifen 18 ein Kautschukstreifen eingesetzt, welcher eine vulkanisierbare Kautschukmischung umfasst und der beispielsweise durch Extrusion erhalten werden kann. Die Viskosität des nicht-metallischen Verstärkungsstreifens 18 wird dabei so gewählt, dass dieser durch leichten Druck an die Form der Rille 16 angepasst werden kann, um damit die Gesamtoberfläche des Kabelkerns 10 zu glätten. In analoger Weise zu der Fig. 1 kann auch hier ein entsprechender nicht-metallischer Verstärkungsstreifen 18 in sämtlichen Rillen 16 angeordnet werden, wodurch sich am Ende des in Fig. 2 gezeigten Verfahrens ein modifizierter Kabelkern 20 ergibt, auf dessen Oberfläche nur noch geringfügige metallische Bereiche sichtbar sind.

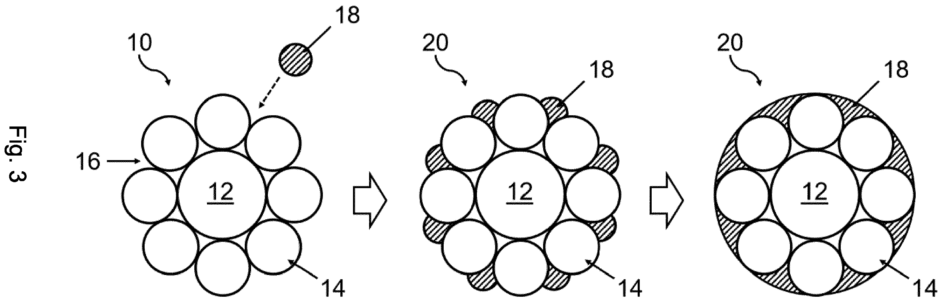

Die in Fig. 3 schematisch dargestellte Verfahrensführung des erfindungsgemäßen Verfahrens entspricht weitgehend dem vorstehend für Fig. 2 beschriebenen Verfahren. Jedoch ist in diesem Beispiel die Viskosität der eingesetzten vulkanisierbaren Kautschukmischung höher, sodass im letzten Schritt zum Ausformen der in den Rillen 16 der Oberfläche des modifizierten Kabelkerns 20 angeordneten nicht-metallischen Verstärkungsstreifen 18 ein Ausformwerkzeug verwendet wird, durch dessen ringförmige Ausnehmung der modifizierte Kabelkern 20 geführt wird, um die aufliegenden nicht-metallischen Verstärkungsstreifen 18 an den Kabelkern 10 zu pressen und überschüssiges Material abzutragen, sodass der endgültige Querschnitt des modifizierten Kabelkerns 20 im Wesentlichen der Einhüllenden des Querschnitts des Kabelkerns 10 entspricht, da in sämtlichen Rillen 16 jeweils ein ausgeformter nicht-metallischer Verstärkungsstreifen 18 angeordnet ist.

### Bezugszeichenliste

- 10: Kabelkern
- 12: Kernfilament
- 14: Außenfilamente
- 16: Rillen
- 18: nicht-metallischer Verstärkungsstreifen
- 20: modifizierter Kabelkern

## Patentansprüche

1. Verfahren zur Modifikation eines Kabelkerns (10), insbesondere für den Einsatz in der Reifenfertigung, umfassend die folgenden Verfahrensschritte:
v1) Herstellen oder Bereitstellen eines Kabelkerns (10), umfassend ein Kernfilament (12) und zumindest eine um das Kernfilament (12) herum angeordnete Filamentlage, umfassend eine Vielzahl von Außenfilamenten (14), wobei die Oberfläche des Kabelkerns (10) eine Vielzahl von Rillen (16) aufweist, die durch die Außenfilamente (14) der äußersten Filamentlage gebildet werden,
v2) Herstellen oder Bereitstellen eines oder mehrerer nicht-metallischer Verstärkungsstreifen (18), wobei zumindest ein nicht-metallischer Verstärkungsstreifen (18) ausgewählt ist aus der Gruppe bestehend aus beschichteten Fasern und Kautschukstreifen, umfassend eine vulkanisierbare Kautschukmischung, und
v3) Anordnen des einen oder der mehreren nicht-metallische Verstärkungsstreifen (18) in einer oder mehreren der Rillen (16) der Oberfläche des Kabelkerns (10) zum Erhalt eines modifizierten Kabelkerns (20), wobei der eine oder die mehreren nicht-metallischen Verstärkungsstreifen (18) so um die äußere Filamentlage des Kabelkerns (10) gewickelt sind, dass diese in den Rillen (16) der Oberfläche des Kabelkerns (10) angeordnet sind.

2. Verfahren nach Anspruch 1, wobei der Kabelkern (10) in Verfahrensschritt v1) hergestellt wird, wobei das Herstellen durch Wicklung der Außenfilamente (14) der äußersten Filamentlage um das Kernfilament (12) oder um die Außenfilamente (14) der unterliegenden Filamentlage erfolgt, wobei das Anordnen des einen oder der mehreren nicht-metallischen Verstärkungsstreifen (18) in den Rillen (16) der Oberfläche des Kabelkerns (10) zeitgleich mit der Wicklung der Außenfilamente (14) der äußersten Filamentlage erfolgt.

3. Verfahren nach Anspruch 1, wobei das Anordnen des einen oder der mehreren nicht-metallischen Verstärkungsstreifen (18) in den Rillen (16) der Oberfläche des Kabelkerns (10) nach der Herstellung oder Bereitstellung des Kabelkerns (10) erfolgt.

4. Verfahren nach einem der Ansprüche 1 bis 3, wobei zumindest ein nicht-metallischer Verstärkungsstreifen (18), bevorzugt sämtliche nicht-metallischen Verstärkungsstreifen (18), ausgewählt ist aus der Gruppe bestehend aus beschichteten Glasfasern, Naturfasern Kunststofffasern und Kautschukstreifen, umfassend eine vulkanisierbare Kautschukmischung.

5. Verfahren nach einem der Ansprüche 1 bis 4, wobei zumindest ein nicht-metallischer Verstärkungsstreifen (18), bevorzugt sämtliche nicht-metallischen Verstärkungsstreifen (18), eine vulkanisierbare Kautschukmischung umfasst, wobei das Verfahren zusätzlich den folgenden Verfahrensschritt umfasst:
v4) Ausformen der in den Rillen (16) der Oberfläche des modifizierten Kabelkerns (20) angeordneten nicht-metallischen Verstärkungsstreifen (18) zur Anpassung der nicht-metallischen Verstärkungsstreifen (18) an die Form der Rillen (16) und/oder zum Erzeugen einer glatteren Oberfläche des modifizierten Kabelkerns (20) und/oder zur zumindest teilweisen Ummantelung, bevorzugt zur vollständigen Ummantelung, des Kabelkerns (10) mit der vulkanisierbaren Kautschukmischung,
wobei das Ausformen bevorzugt mit einem Ausformwerkzeug erfolgt, wobei das Ausformen besonders bevorzugt dadurch erfolgt, dass der modifizierte Kabelkern (20) durch ein Ausformwerkzeug mit einer ringförmigen Ausnehmung geführt wird, dessen Innendurchmesser im Wesentlichen der Einhüllenden des Querschnitts des Kabelkerns (10) entspricht.

6. Verfahren zur Herstellung eines Fahrzeugreifens, insbesondere eines Fahrzeugluftreifens, umfassend die Verfahrensschritte des Verfahrens nach einem der Ansprüche 1 bis 5, sowie die Verfahrensschritte:
v5) Herstellen eines Reifenrohlings umfassend den modifizierten Kabelkern (20) in zumindest einem Bauteil, bevorzugt im Reifenwulst, besonders bevorzugt als Wulstkern, wobei der modifizierte Kabelkern (20) im Reifenrohling zumindest teilweise von einer vernetzbaren Gummierungsmischung umgeben ist, und
v6) Vulkanisieren des Reifenrohlings zur Herstellung eines Fahrzeugreifens, bevorzugt in einer Vulkanisationsform.

7. Modifizierter Kabelkern (20), umfassend ein Kernfilament (12) und um das Kernfilament (12) herum angeordnet zumindest eine Filamentlage, umfassend eine Vielzahl von Außenfilamenten (14), wobei die Oberfläche des modifizierten Kabelkerns (20) eine Vielzahl von Rillen (16) aufweist, die durch die Außenfilamente (14) der äußersten Filamentlage gebildet werden, wobei in den Rillen (16) der Oberfläche des modifizierten Kabelkerns (20) ein oder mehrere nicht-metallische Verstärkungsstreifen (18) angeordnet sind, wobei zumindest ein nicht-metallischer Verstärkungsstreifen (18) ausgewählt ist aus der Gruppe bestehend aus beschichteten Fasern und Kautschukstreifen, umfassend eine vulkanisierbare Kautschukmischung, wobei der eine oder die mehreren nicht-metallischen Verstärkungsstreifen (18) so um die äußere Filamentlage des Kabelkerns (10) gewickelt sind, dass diese in den Rillen (16) der Oberfläche des Kabelkerns (10) angeordnet sind.

8. Kautschukprodukt, insbesondere Luftfeder, umfassend den modifizierten Kabelkern (20) nach Anspruch 7 in zumindest einem Bauteil, wobei der modifizierte Kabelkern (20) im Kautschukprodukt zumindest teilweise von einer vernetzten Gummierungsmischung umgeben ist und wobei eine gegebenenfalls im modifizierten Kabelkern (20) enthaltene vulkanisierbare Kautschukmischung vulkanisiert vorliegt.

9. Kautschukprodukt nach Anspruch 8, wobei das Kautschukprodukt ein Fahrzeugreifen, bevorzugt ein PKW oder LKW Reifen ist, umfassend den modifizierten Kabelkern (20) im Reifenwulst, bevorzugt als Wulstkern.

10. Verwendung von nicht-metallischen Verstärkungsstreifen (18) in den an der Oberfläche eines Kabelkerns (10) durch die Außenfilamente (14) der äußersten Filamentlage gebildeten Rillen (16) zur Verbesserung der Adhäsion von Gummiwerkstoffen am Kabelkern (10), wobei zumindest ein nicht-metallischer Verstärkungsstreifen (18) ausgewählt ist aus der Gruppe bestehend aus beschichteten Fasern und Kautschukstreifen, umfassend eine vulkanisierbare Kautschukmischung, wobei die nicht-metallischen Verstärkungsstreifen (18) so um die äußere Filamentlage des Kabelkerns (10) gewickelt werden, dass diese in den Rillen (16) der Oberfläche des Kabelkerns (10) angeordnet sind.

## Claims

1. Method for modifying a cable core (10), in particular for use in tyre manufacture, comprising the following method steps:
v1) producing or providing a cable core (10), comprising a core filament (12) and at least one filament ply arranged around the core filament (12), comprising a multiplicity of outer filaments (14), wherein the surface of the cable core (10) has a multiplicity of grooves (16), which are formed by the outer filaments (14) of the outermost filament ply,
v2) producing or providing one or more non-metal reinforcing strips (18), wherein at least one non-metal reinforcing strip (18) is selected from the group consisting of coated fibres and rubber strips, comprising a vulcanizable rubber compound, and
v3) arranging the one or more non-metal reinforcing strips (18) in one or more of the grooves (16) of the surface of the cable core (10) to obtain a modified cable core (20), wherein the one or more non-metal reinforcing strips (18) are wound around the outer filament ply of the cable core (10) such that they are arranged in the grooves (16) of the surface of the cable core (10).

2. Method according to Claim 1, wherein the cable core (10) is produced in method step v1), wherein it is produced by winding the outer filaments (14) of the outermost filament ply around the core filament (12) or around the outer filaments (14) of the underlying filament ply, wherein the one or more non-metal reinforcing strips (18) are arranged in the grooves (16) of the surface of the cable core (10) at the same time as the outer filaments (14) of the outermost filament ply are wound.

3. Method according to Claim 1, wherein the one or more non-metal reinforcing strips (18) are arranged in the grooves (16) of the surface of the cable core (10) after the cable core (10) is produced or provided.

4. Method according to one of Claims 1 to 3, wherein at least one non-metal reinforcing strip (18), preferably all of the non-metal reinforcing strips (18), is/are selected from the group consisting of coated glass fibres, natural fibres, synthetic fibres and rubber strips, comprising a vulcanizable rubber compound.

5. Method according to one of Claims 1 to 4, wherein at least one non-metal reinforcing strip (18), preferably all of the non-metal reinforcing strips (18), comprise(s) a vulcanizable rubber compound, wherein the method additionally comprises the following method step:
v4) extruding the non-metal reinforcing strips (18) arranged in the grooves (16) of the surface of the modified cable core (20) to adapt the non-metal reinforcing strips (18) to the form of the grooves (16) and/or to create a smoother surface of the modified cable core (20) and/or to at least partially encapsulate, preferably completely encapsulate, the cable core (10) with the vulcanizable rubber compound,
wherein the extruding is preferably performed with an extrusion die, wherein the extruding is particularly preferably performed by the modified cable core (20) being passed through an extrusion die with an annular clearance, the inside diameter of which corresponds substantially to the envelope of the cross section of the cable core (10).

6. Method for producing a vehicle tyre, in particular a pneumatic vehicle tyre, comprising the method steps of the method according to one of Claims 1 to 5 and the method steps of:
v5) producing a green tyre comprising the modified cable core (20) in at least one component, preferably in the tyre bead, particularly preferably as a bead core, wherein the modified cable core (20) in the green tyre is at least partially surrounded by a crosslinkable rubberizing compound, and
v6) vulcanizing the green tyre to produce a vehicle tyre, preferably in a vulcanizing mould.

7. Modified cable core (20), comprising a core filament (12) and, arranged around the core filament (12), at least one filament ply, comprising a multiplicity of outer filaments (14), wherein the surface of the modified cable core (20) has a multiplicity of grooves (16), which are formed by the outer filaments (14) of the outermost filament ply, wherein one or more non-metal reinforcing strips (18) are arranged in the grooves (16) of the surface of the modified cable core (20), wherein at least one non-metal reinforcing strip (18) is selected from the group consisting of coated fibres and rubber strips, comprising a vulcanizable rubber compound, wherein the one or more non-metal reinforcing strips (18) are wound around the outer filament ply of the cable core (10) such that they are arranged in the grooves (16) of the surface of the cable core (10).

8. Rubber product, in particular an air spring, comprising the modified cable core (20) according to Claim 7 in at least one component, wherein the modified cable core (20) in the rubber product is at least partially surrounded by a crosslinked rubberizing compound and wherein a vulcanizable rubber compound possibly contained in the modified cable core (20) is in a vulcanized state.

9. Rubber product according to Claim 8, wherein the rubber product is a vehicle tyre, preferably a car or truck tyre, comprising the modified cable core (20) in the tyre bead, preferably as a bead core.

10. Use of non-metal reinforcing strips (18) in the grooves (16) formed on the surface of a cable core (10) by the outer filaments (14) of the outermost filament ply to improve the adhesion of rubber materials to the cable core (10), wherein at least one non-metal reinforcing strip (18) is selected from the group consisting of coated fibres and rubber strips, comprising a vulcanizable rubber compound, wherein the non-metal reinforcing strips (18) are wound around the outer filament ply of the cable core (10) such that they are arranged in the grooves (16) of the surface of the cable core (10).

## Revendications

1. Procédé de modification d'une âme de câble (10), notamment pour l'utilisation dans la fabrication de pneus, comprenant les étapes de procédé suivantes :
v1) la préparation ou la fourniture d'une âme de câble (10), comprenant un filament d'âme (12) et au moins une couche de filaments agencée autour du filament d'âme (12), comprenant une pluralité de filaments extérieurs (14), la surface de l'âme de câble (10) présentant une pluralité de rainures (16) formées par les filaments extérieurs (14) de la couche de filaments la plus extérieure,
v2) la préparation ou la fourniture d'une ou de plusieurs bandes de renforcement non métalliques (18), au moins une bande de renforcement non métallique (18) étant choisie dans le groupe constitué de fibres revêtues et de bandes de caoutchouc, comprenant un mélange de caoutchouc vulcanisable, et
v3) l'agencement des une ou plusieurs bandes de renforcement non métalliques (18) dans une ou plusieurs des rainures (16) de la surface de l'âme de câble (10) pour obtenir une âme de câble modifiée (20), les une ou plusieurs bandes de renforcement non métalliques (18) étant enroulées autour de la couche de filaments extérieure de l'âme de câble (10) de manière à être agencées dans les rainures (16) de la surface de l'âme de câble (10).

2. Procédé selon la revendication 1, dans lequel l'âme de câble (10) est préparée dans l'étape de procédé v1), la préparation étant effectuée en enroulant les filaments extérieurs (14) de la couche de filaments la plus extérieure autour du filament d'âme (12) ou autour des filaments extérieurs (14) de la couche de filaments sous-jacente, l'agencement des une ou plusieurs bandes de renforcement non métalliques (18) dans les rainures (16) de la surface de l'âme de câble (10) est effectuée simultanément à l'enroulement des filaments extérieurs (14) de la couche de filaments la plus extérieure.

3. Procédé selon la revendication 1, dans lequel l'agencement des une ou plusieurs bandes de renforcement non métalliques (18) dans les rainures (16) de la surface de l'âme de câble (10) est effectuée après la préparation ou la fourniture de l'âme de câble (10).

4. Procédé selon l'une quelconque des revendications 1 à 3, dans lequel au moins une bande de renforcement non métallique (18), de préférence toutes les bandes de renforcement non métalliques (18), est choisie dans le groupe constitué de fibres de verre revêtues, de fibres naturelles, de fibres plastiques et de bandes de caoutchouc, comprenant un mélange de caoutchouc vulcanisable.

5. Procédé selon l'une quelconque des revendications 1 à 4, dans lequel au moins une bande de renforcement non métallique (18), de préférence toutes les bandes de renforcement non métalliques (18), comprend un mélange de caoutchouc vulcanisable, le procédé comprenant en outre l'étape de procédé suivante :
v4) la mise en forme des bandes de renforcement non métalliques (18) agencées dans les rainures (16) de la surface de l'âme de câble modifiée (20) pour adapter les bandes de renforcement non métalliques (18) à la forme des rainures (16) et/ou pour produire une surface plus lisse de l'âme de câble modifiée (20) et/ou pour enrober au moins partiellement, de préférence pour enrober complètement, l'âme de câble (10) avec le mélange de caoutchouc vulcanisable,
la mise en forme étant effectuée de préférence avec un outil de mise en forme, la mise en forme étant effectuée de manière particulièrement préférée en faisant passer l'âme de câble modifiée (20) à travers un outil de mise en forme ayant un évidement annulaire dont le diamètre intérieur correspond essentiellement à l'enveloppe de la section transversale de l'âme de câble (10).

6. Procédé de préparation d'un pneu de véhicule, notamment d'un pneu à air de véhicule, comprenant les étapes de procédé du procédé selon l'une quelconque des revendications 1 à 5, ainsi que les étapes de procédé :
v5) la préparation d'une ébauche de pneu comprenant l'âme de câble modifiée (20) dans au moins un composant, de préférence dans le talon du pneu, de manière particulièrement préférée en tant que tringle de talon, l'âme de câble modifiée (20) étant entourée dans l'ébauche de pneu au moins partiellement par un mélange de gommage réticulable, et
v6) la vulcanisation de l'ébauche de pneu pour préparer un pneu de véhicule, de préférence dans un moule de vulcanisation.

7. Âme de câble modifiée (20), comprenant un filament d'âme (12) et, agencée autour du filament d'âme (12), au moins une couche de filaments comprenant une pluralité de filaments extérieurs (14), la surface de l'âme de câble modifiée (20) présentant une pluralité de rainures (16) formées par les filaments extérieurs (14) de la couche de filaments la plus extérieure, une ou plusieurs bandes de renforcement non métalliques (18) étant agencées dans les rainures (16) de la surface de l'âme de câble modifiée (20), au moins une bande de renforcement non métallique (18) étant choisie dans le groupe constitué de fibres revêtues et de bandes de caoutchouc, comprenant un mélange de caoutchouc vulcanisable, les une ou plusieurs bandes de renforcement non métalliques (18) étant enroulées autour de la couche de filaments extérieure de l'âme de câble (10) de manière à être agencées dans les rainures (16) de la surface de l'âme de câble (10).

8. Produit en caoutchouc, notamment ressort pneumatique, comprenant l'âme de câble modifiée (20) selon la revendication 7 dans au moins un composant, l'âme de câble modifiée (20) étant entourée dans le produit en caoutchouc au moins partiellement par un mélange de gommage réticulé et un mélange de caoutchouc vulcanisable éventuellement contenu dans l'âme de câble modifiée (20) se présentant sous forme vulcanisée.

9. Produit en caoutchouc selon la revendication 8, dans lequel le produit en caoutchouc est un pneu de véhicule, de préférence un pneu de voiture ou de camion, comprenant l'âme de câble modifiée (20) dans le talon du pneu, de préférence en tant que tringle de talon.

10. Utilisation de bandes de renforcement non métalliques (18) dans les rainures (16) formées à la surface d'une âme de câble (10) par les filaments extérieurs (14) de la couche de filaments la plus extérieure pour améliorer l'adhérence de matériaux en caoutchouc à l'âme de câble (10), au moins une bande de renforcement non métallique (18) étant choisie dans le groupe constitué de fibres revêtues et de bandes de caoutchouc, comprenant un mélange de caoutchouc vulcanisable, les bandes de renforcement non métalliques (18) étant enroulées autour de la couche de filaments extérieure de l'âme de câble (10) de manière à être agencées dans les rainures (16) de la surface de l'âme de câble (10).
